(19)

**Europäisches Patentamt**
**European Patent Office**
**Office européen des brevets**

(11)  **EP 3 561 117 B1**

(12)  **EUROPEAN PATENT SPECIFICATION**

(45) Date of publication and mention
of the grant of the patent:
**25.08.2021  Bulletin 2021/34**

(51) Int Cl.:
*C22C 38/00* <sup>(2006.01)</sup>    *C22C 38/02* <sup>(2006.01)</sup>
*C22C 38/24* <sup>(2006.01)</sup>    *C22C 38/26* <sup>(2006.01)</sup>
*C22C 38/28* <sup>(2006.01)</sup>    *C22C 38/04* <sup>(2006.01)</sup>
*C22C 38/20* <sup>(2006.01)</sup>    *C22C 38/22* <sup>(2006.01)</sup>
*H01M 8/021* <sup>(2016.01)</sup>    *C23C 22/50* <sup>(2006.01)</sup>
*C23C 22/83* <sup>(2006.01)</sup>

(21) Application number: **17884424.7**

(22) Date of filing: **30.11.2017**

(86) International application number:
**PCT/KR2017/013918**

(87) International publication number:
**WO 2018/117469 (28.06.2018 Gazette 2018/26)**

(54)  **STAINLESS STEEL FOR POLYMER FUEL CELL SEPARATION PLATE, HAVING EXCELLENT CONTACT RESISTANCE, AND MANUFACTURING METHOD THEREFOR**

EDELSTAHL FÜR POLYMERBRENNSTOFFZELLENTRENNPLATTE MIT HERVORRAGENDEM KONTAKTWIDERSTAND UND HERSTELLUNGSVERFAHREN DAFÜR

ACIER INOXYDABLE DESTINÉ À UNE PLAQUE DE SÉPARATION DE PILE À COMBUSTIBLE POLYMÈRE ET PRÉSENTANT UNE EXCELLENTE RÉSISTANCE DE CONTACT, ET PROCÉDÉ DE FABRICATION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **22.12.2016  KR 20160176695**

(43) Date of publication of application:
**30.10.2019  Bulletin 2019/44**

(73) Proprietor: **POSCO**
**Pohang-si, Gyeongsangbuk-do 37859 (KR)**

(72) Inventors:
• **KIM, Jong Hee**
  **Daejeon 34200 (KR)**
• **KIM, Kwang-Min**
  **Pohang-si**
  **Gyeongsangbuk-do 37669 (KR)**
• **SEO, Bo Sung**
  **Pohang-si**
  **Gyeongsangbuk-do 37656 (KR)**

(74) Representative: **Potter Clarkson**
**The Belgrave Centre**
**Talbot Street**
**Nottingham NG1 5GG (GB)**

(56) References cited:
**EP-A1- 1 726 674**    **EP-A1- 3 062 376**
**WO-A1-2016/129598**    **WO-A1-2016/129599**
**JP-A- 2006 318 652**    **JP-A- 2011 038 166**
**JP-A- 2014 152 368**    **KR-A- 20120 049 410**
**KR-B1- 100 777 123**

• **AUTORENKOLLEKTIV: "Spurenelemente im Stahl - Moeglichkeiten zur Beeinflussung im Smelzbetrieb", SPURENELEMENTE IN STAEHLEN, VERLAG STAHLEISEN, DUESSELDORF, DE, 1 January 1985 (1985-01-01), pages 19-22, XP002433212,**

**Description**

[Technical Field]

The present disclosure relates to stainless steel for a PEMFC separator and a method of manufacturing the same, and more particularly, to stainless steel for a PEMFC separator having excellent contact resistance and a method for manufacturing the same.

[Background Art]

A Polymer Electrolyte Membrane Fuel Cell (PEMFC) is a fuel cell using a polymer film having hydrogen ion exchange properties as an electrolyte, and has a low operation temperature of about 80 °C and high efficiency compared to other types of fuel cells. Also, the PEMFC has fast startup, high output density, and a simple main-body structure. For these reasons, the PEMFC can be used for vehicles or homes.

The PEMFC has a unit cell structure in which gas diffusion layers and separators are stacked on both sides of a Membrane Electrode Assembly (MEA) consisting of an electrolyte, an anode electrode, and a cathode electrode. Several unit cells are connected in series to form a fuel cell stack.

The separators supply fuel (hydrogen and reformed gas) and an oxidizer (oxygen and air) to the electrodes of the fuel cell. In the separators, flow paths for discharging water, which is an electrochemical reactant, may be formed. The separators perform a function of mechanically supporting the MEA and the gas diffusion layers and a function of electrically connecting to neighboring unit cells.

Typically, the separators have been manufactured with a graphite material. However, recently, stainless steel is widely used to manufacture the separators, in consideration of the manufacturing cost, weight, etc. Stainless steel to be used to manufacture the separators should have excellent corrosiveness in a strong acidic environment which is the operating environment of fuel cells, and have excellent corrosion resistance in view of weight reduction, miniaturization, and productivity.

However, conventional stainless steel exhibits high resistance due to a passive film formed on a surface, which can lead to resistance loss in fuel cell performance. To overcome this problem, a process of coating a conductive material such as gold (Au), carbon, or nitride has been proposed.

However, these methods have problems in that the manufacturing cost and the manufacturing time are increased due to the additional process for coating a noble metal or a coating material, thereby reducing the productivity.

In order to solve these problems, studies are underway to lower the contact resistance by surface modification.

Patent Document 1 proposes stainless steel for the separator having low interfacial contact resistance and high corrosion potential by controlling the surface modification process. Patent Document 2 proposes a method of producing stainless steel having improved corrosion resistance and contact resistance by soaking stainless steel containing 17 to 23% Cr in a solution of $[HF] \geq [HNO_3]$. Patent Document 3 proposes stainless steel having small contact resistance by controlling the atomic ratio of Cr and Fe to 1 or more in the passive film of stainless steel having 15 to 45% of Cr and 0.1 to 5% of Mo.

However, these methods have limitations in lowering the contact resistance of stainless steel in a fuel cell operating environment requiring long-term performance in a strong acid environment only by controlling the atomic ratio of Cr and Fe in the region within a few nm in thickness from the surface of the passive film.

(Patent Document 0001) Korean Patent Publication No. 10-2014-0081161
(Patent Document 0002) Korean Patent Publication No. 10-2013-0099148
(Patent Document 0003) Japanese Laid-Open Patent Publication No. 2004-149920

EP 3062376 A1 in addition discloses a material for a fuel cell separator in the form of a ferritic stainless steel having the composition (in weight %) C: 0.0083; N: 0.0051; Si: 0.18; Mn: 0.20; P: 0.026; S: 0.006; Cr: 29.5; Ti: 0.12; Nb: 0.11; and Mo: 1.96.

Furthermore EP 1726674 A1 discloses a ferritic stainless steel for forming a current-carrying member that is useable as a separator for a PEMFC, the stainless steel comprising (in weight%) Cr: 16 to 45, C: 0.03 or less, N: 0.03 or less, (C + N): 0.03 or less, Mo: 0.1 to 5.0 and the balance Fe and inevitable impurities.

[Disclosure]

[Technical Problem]

The present disclosure is directed to providing stainless steel for a Polymer Electrolyte Membrane Fuel Cell (PEMFC) separator capable of reducing contact resistance without an additional surface treatment by removing a non-conductive film formed on a surface of the stainless steel and improving the corrosion resistance by forming a new conductive film and by controlling the ratio of Cr and Sn, Cl, and F minor alloys in a passive film of a few nm in thickness of stainless steel.

The present disclosure also provides a method of manufacturing stainless steel for the PEMFC separator.

[Technical Solution]

Stainless steel for a Polymer Electrolyte Membrane Fuel Cell (PEMFC) separator according to the invention includes: by weight percent, greater than 0 to 0.02% of C, greater than 0 to 0.02% of N, greater than 0 to 0.25% of Si, greater than 0 to 0.2% of Mn, greater than 0 to 0.04% of P, greater than 0 to 0.02% of S, 25 to 34% of Cr, greater than 0 to 0.5% of Ti, greater than 0 to 0.5% of Nb, 0.05 to 0.6% of Sn, optionally at least one selected from a group consisting of 0 to 0.6% of Cu, 0 to 0.6% of V, and 0.05 to 2.5% of Mo and the remainder comprising iron (Fe) and other unavoidable impurities, wherein the value of the following formula (1) with respect to the atomic ratio of X and Sn in the region within 3 nm in thickness of a surface of a passive film is 0.001 or more, wherein the contact resistance index defined by the following formula (2) relating to the content of Cr and Sn is 25 or more and the value of the following formula (3) with respect to the atomic ratio of Sn and Cr in a region within 3 nm in thickness of the surface of the passive film is 0.001 or more.

$$X / Sn \text{ ------ formula (1)}$$

Where X is Cl or F analyzed using an X-ray photoelectron spectrometer (XPS)

$$Cr+10Sn \text{ ------ formula (2)}$$

$$(10*Sn)/Cr \text{ ------ formula (3)}$$

in which Cr and Sn refer to the weight percent of each element.

Further, according to an embodiment of the present invention, the value of the formula (3) may be 0.004 or more.

Also, according to an embodiment of the present invention, the contact resistance of the stainless steel may be 20 mΩ·cm$^2$ or less at a contact pressure of 140N/cm$^2$.

According to an embodiment of the present invention, there is provided a method of manufacturing stainless steel for a Polymer Electrolyte Membrane Fuel Cell (PEMFC) separator, the method including: hot-rolling and cold-rolling stainless steel comprising by weight percent, greater than 0 to 0.02% of C, greater than 0 to 0.02% of N, greater than 0 to 0.25% of Si, greater than 0 to 0.2% of Mn, greater than 0 to 0.04% of P, greater than 0 to 0.02% of S, 25 to 34% of Cr, greater than 0 to 0.5% of Ti, greater than 0 to 0.5% of Nb, 0.05 to 0.6% of Sn, optionally at least one selected from a group consisting of 0 to 0.6% of Cu, 0 to 0.6% of V, and 0.05 to 2.5% of Mo and the remainder comprising iron (Fe) and other unavoidable impurities, to manufacture a cold-rolled thin steel sheet; and soaking the cold-rolled thin steel sheet in an acid solution containing at least one of Cl or F.

Also, according to an embodiment of the present invention, the acid solution may include hydrochloric acid or hydrofluoric acid.

[Advantageous Effects]

According to an embodiment of the present disclosure, a non-conductive film formed on the surface of the stainless steel is removed and a new conductive film is formed to improve the corrosion resistance. At the same time, the contact resistance can be reduced without having to perform separate surface processing such as coating by controlling the ratio of Cr and Sn, Cl, and F minor alloys in the passive film of the stainless steel.

[Description of Drawings]

FIG. 1 is a cross-sectional view of a unit cell for describing a typical polymer fuel cell.
FIG. 2 is a plot describing the correlation between the content of components in stainless steel, the atomic ratio in a passive film, and the contact resistance according to an embodiment of the present disclosure.

[Modes of the Invention]

Hereinafter, the embodiments of the present invention will be described in detail with reference to the accompanying drawings. The following embodiments are provided to transfer the technical concepts of the present invention to one of ordinary skill in the art. However, the present invention is only limited by the appended claims. In the drawings, parts that are irrelevant to the descriptions may be not shown in order to clarify the present disclosure, and also, for easy understanding, the sizes of components are more or less exaggeratedly shown.

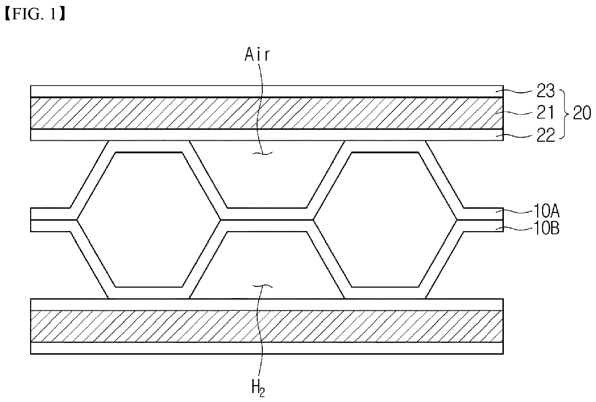

FIG. 1 is a cross-sectional view of a unit cell for describing a typical polymer fuel cell.

Referring to FIG. 1, a Polymer Electrolyte Membrane Fuel Cell (PEMFC) may have a unit cell structure in which a gas diffusion layer (22, 23) and a separator are stacked on both sides of a membrane electrode assembly (21) consisting of an electrolyte, an anode and a cathode electrode.

The separators supply fuel (hydrogen) and an oxidizer (air) to the electrodes of the fuel cell. In the separators, flow paths for discharging water, which is an electrochemical reactant, may be formed. The separators perform a function of mechanically supporting the membrane electrode assembly (21) and the gas diffusion layers (22,23) and a function of electrically connecting to neighboring unit cells.

A flow path of the PEMFC separator is composed of a channel through which fuel or an oxidizer passes, and a land, which is in contact with gas diffusion layers, to function as an electrical passage. In order to easily supply reactants and easily discharge products, it is very important to control the shape and surface state of the flow path.

A material to be applied to a separator (10) should have excellent corrosiveness in a strong acidic environment, which is the operating environment of fuel cells, and should be made of stainless steel excellent in corrosion resistance and conductivity in view of weight reduction, miniaturization, and productivity.

Accordingly, the separator (10) includes the stainless steel according to an embodiment of the present disclosure.

The stainless steel includes: by weight percent, greater than 0 to 0.02% of C, greater than 0 to 0.02% of N, greater than 0 to 0.25% of Si, greater than 0 to 0.2% of Mn, greater than 0 to 0.04% of P, greater than 0 to 0.02% of S, 25 to 34% of Cr, greater than 0 to 0.5% of Ti, greater than 0 to 0.5% of Nb, 0.05 to 0.6% of Sn, and optionally at least one selected from a group consisting of 0 to 0.6% of Cu (excluding 0%), 0 to 0.6% of V (excluding 0%), and 0.05 to 2.5% and the remainder comprising iron (Fe) and other unavoidable impurities.

Hereinafter, a reason for the numerical limitation of element contents according to the embodiments of the present disclosure will be described. In the following description, a unit of weight percentage (wt%) will be used unless otherwise noted.

C: 0 to 0.02% (excluding 0%), N: 0 to 0.02% (excluding 0%)

Carbon (C) and nitrogen (N) may form Cr carbonitride of the stainless steel. As a result, the corrosion resistance of a layer with a lack of chrome (Cr) may be degraded. Accordingly, as the carbon (C) content and the nitrogen (N) content are lower, it will be more preferable. Therefore, in the present disclosure, the carbon (C) content is limited to 0.02 wt%, or less (excluding 0%) and the nitrogen (N) content is limited to 0.02 wt% or less (excluding 0%).

Si: 0 to 0.25% (excluding 0%)

Although silicon (Si) is an element that is effective for deacidification, silicon (Si) suppresses toughness and formability, and $SiO_2$ oxide produced during annealing degrades conductivity of a product. Therefore, in the present disclosure, the silicon (Si) content is limited to 0.25 wt% or less (excluding 0%).

Mn: 0 to 0.2% (excluding 0%)

Although manganese (Mn) is an element that is effective for deacidification, MnS, which is an inclusion, may reduce the corrosion resistance. Therefore, in the present disclosure, the manganese (Mn) content is limited to 0.2 wt% or less (excluding 0%).

P: 0 to 0.04% (excluding 0%)

Since phosphorus (P) reduces toughness as well as corrosion resistance, in the present disclosure, the phosphorus (P) content is limited to 0.04 wt% or less (excluding 0%).

S: 0 to 0.02% (excluding 0%)

Sulfur (S) may form MnS, and MnS may become a start point of corrosion to thereby reduce the corrosion resistance. Therefore, in the present disclosure, the sulfur (S) content is limited to 0.02 wt% or less (excluding 0%).

Cr: 25 to 34%

Chrome (Cr) is an element increasing corrosion resistance in an acidic atmosphere in which the fuel cell operates. However, if chrome (Cr) is excessively added, chrome (Cr) may reduce toughness. Therefore, in the present disclosure, the chrome (Cr) content is limited to 25 to 34 wt%.

Ti: 0 to 0.5% (excluding 0%), Nb: 0 to 0.5% (excluding 0%)

Although titanium (Ti) and niobium (Nb) are elements that are effective in forming carbonitride from carbon (C) and nitrogen (N) in the steel, titanium (Ti) and niobium (Nb) may degrade toughness. Therefore, in the present disclosure, the titanium (Ti) content is preferably limited to 0.5 wt% or less (excluding 0%) and the niobium (Nb) content is limited to 0.5 wt% or less (excluding 0%).

Sn: 0.05 to 0.6%

Sn is an element which lowers the contact resistance due to the dissolving of a surface passive film, but it is preferable to limit the upper limit to 0.6%, because it inhibits hot workability when added in excess.
In the present disclosure, Cr and Sn are elements contributing to lowering contact resistance. It has been found that when the Cr+10*Sn expressed by the contact resistance index is 25% or more by weight percent, it contributes to lowering the contact resistance, which will be described in detail later.
Stainless steel according to an embodiment of the present disclosure may further include at least one selected from a group consisting of 0 to 0.6% of Cu, 0 to 0.6% of V, and 0.05 to 2.5% of Mo.

Cu: 0 to 0.6%, Ni: 0 to 0.6%

Copper (Cu) is an element whose formability may deteriorate due to solid solution hardening, and nickel (Ni) is an element whose elution and formability may deteriorate when it is added by a small amount. Accordingly, copper (Cu) and nickel (Ni) are considered as impurities in the present disclosure.

V: 0 to 0.6%

Vanadium (V) may be effective in lowering the elution of iron (Fe) in an environment in which the fuel cell operates. However, if vanadium (V) is excessively added, vanadium (V) may degrade toughness. Therefore, in the present disclosure, the vanadium (V) content may be preferably limited to 0 to 0.6 wt%.

Mo: 0.05 to 2.5%

Molybdenum (Mo) may be added as an element for increasing the corrosion resistance of the stainless steel. However, if molybdenum (Mo) is excessively added, toughness and hydrophilicity may be more or less degraded. Therefore, in the present disclosure, molybdenum (Mo) may be preferably limited to 0.05 to 2.5 wt%.
Stainless steel for the PEMFC separator according to the present invention has a contact resistance index of 25 or more, which is defined by the following formula (1) with respect to the content of Cr and Sn. In the following formula Cr and Sn refer to the weight % of those elements.

$$Cr+10Sn \text{ ------ formula (1)}$$

Cr and Sn act as advantageous elements for inhibiting the growth of the passive film at the fuel cell operating potential. Therefore, when the contact resistance index according to formula (1) is less than 25, there is a problem that the contact resistance durability is poor.
In the invention, the value of the following formula (2) with respect to the atomic ratio of Sn and Cr in the region within 3 nm in thickness from the surface of the passive film is 0.001 or more.

$$(10*Sn)/Cr \text{ ------ formula (2)}$$

Cr and Sn act as facilitating the passage of electrons through the passive film of the thin film due to the formation of Sn oxide in the Cr oxide in the passive film and suppress the formation of insulating pores and insulating oxides of the passive film, and make the passive film thinner. Therefore, when the value of formula (2) is less than 0.001, the contact resistance cannot be sufficiently lowered.

Accordingly, the stainless steel may have an interfacial contact resistance of $20m\Omega \cdot cm^2$ or less at a contact pressure of $140 \text{ N/cm}^2$.

For example, it may be more preferable that the value of formula (2) is 0.004 or more. Accordingly, the contact resistance of the stainless steel may be $15m\Omega \cdot cm^2$ or less.

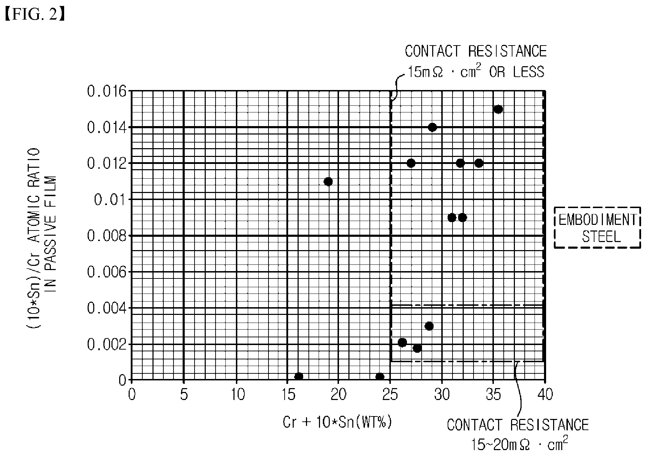

FIG. 2 is for describing the correlation between the content of components in stainless steel, the atomic ratio in a passive film, and the contact resistance according to an embodiment of the present disclosure.

Referring to FIG. 2, Cr+10Sn and (10*Sn)/Cr values of stainless steel according to embodiments of the present disclosure are shown and the results of measurement of their contact resistance are shown. Thus, it can be seen that the stainless steel satisfying the above-mentioned formulas (1) and (2) exhibits excellent characteristics with a contact resistance of $20m\Omega \cdot cm^2$ or less and has a performance exceeding $20m\Omega \cdot cm^2$ in other regions.

Also, in the invention, the value of the following formula (3) with respect to the atomic ratio of X and Sn in the region within 3 nm in thickness from the surface of the passive film is 0.001 or more.

$$X/Sn \text{ ------ formula (3)}$$

Where X is Cl or F.

The passive film of the stainless steel includes Sn oxide, thus, Cl or F ions may be doped with Sn oxide through a soaking step in an acid solution containing at least one of Cl or F. For this reason, the contact resistance of the stainless steel can be further reduced.

Accordingly, the contact resistance of the stainless steel may be $20m\Omega \cdot cm^2$ or less. Preferably, the contact resistance of the stainless steel can be controlled to be $10m\Omega \cdot cm^2$ or less, and accordingly, a target value for commercialization of the PEMFC separator can be achieved.

For example, the thickness of the passive film may be 3.5 nm or less (excluding 0%). In the case of a typical stainless cold-rolled thin steel sheet, the interfacial contact resistance increases by a passive film of a few nanometers (nm) in thickness formed on a surface. Since the passive film of the stainless steel according to an embodiment of the present disclosure is thinned to 3.5 nm or thinner, an effect of reducing the contact resistance by thinning of the passive film having semiconductive characteristics close to insulation may be obtained.

For example, a corrosion potential of the passive film may be 0.3 V (SCE) or higher. The corrosion potential was obtained by cutting a steel sheet material of 0.1 mm in thickness to an area of $cm^2$, soaking the steel sheet material at 70°C in a mixture solution of 1 mole of sulfuric acid and 2 ppm of hydrofluoric acid, which is an operating environment of fuel cells, and then evaluating the potential of the resultant material compared to a saturated calomel electrode (SCE), which is a reference electrode. That is, the stainless steel 10 according to an embodiment of the present disclosure can secure a corrosion potential of 0.3 V (SEC) or higher compared to the saturated calomel electrode (SCE), which is a reference electrode

That is, the stainless steel for the PEMFC separator according to an embodiment of the present disclosure may include the passive film having hydrophilicity, conductivity, corrosion resistance, and low contact resistance.

The stainless steel for the PEMFC separator may be manufactured as a cold-rolled thin steel sheet through hot-rolling and cold-rolling.

The cold-rolled thin steel sheet includes by weight percent, 0 to 0.02% of C (excluding 0%), 0 to 0.02% of N (excluding 0%), 0 to 0.25% of Si (excluding 0%), 0 to 0.2% of Mn (excluding 0%), 0 to 0.04% of P (excluding 0%), 0 to 0.02% of S (excluding 0%), 25 to 34% of Cr, 0 to 0.5% of Ti (excluding 0%), 0 to 0.5% of Nb (excluding 0%), 0.05 to 0.6% of Sn and the remainder comprising iron (Fe) and other unavoidable impurities. The individual elements have been described above.

The cold-rolled thin steel sheet has a Cr + 10Sn value of 25 or more and (10*Sn) / Cr value of 0.001 or more in formula (2), and accordingly, the stainless steel having an interfacial contact resistance of $20m\Omega \cdot cm^2$ or less at a contact pressure of $140 \text{ N/cm}^2$ has excellent contact resistance.

The passive film of the stainless steel includes Sn oxide, thus, the Cl or F ions may be doped into Sn oxide through additionally performing a soaking step in an acid solution containing at least one of Cl or F during the manufacturing processing of stainless steel. For this reason, the contact resistance of the stainless steel can be further reduced.

That is, the contact resistance of the stainless steel cold-rolled thin steel sheet through the step of soaking in the acid solution can be controlled to 10mΩ·cm$^2$ or less, and accordingly, it is possible to achieve a target value for commercialization of the PEMFC separator.

For example, the acid solution may include hydrochloric acid or hydrofluoric acid.

The acid solution may be used solely with hydrochloric acid or hydrofluoric acid, or may include a mixed acid solution including hydrochloric or hydrofluoric acid with another acid solution. For example, the acid solution may include 5 to 20% by weight of hydrochloric acid, or a mixed solution of 5 to 20% by weight of nitric acid and 1 to 5% by weight of hydrofluoric acid may be used.

For example, the cold-rolled thin steel sheet may be soaked in the acid solution at 70°C or lower for 30 to 600 seconds.

Hereinafter, the present disclosure will be described in more detail through embodiments below.

Embodiment

Embodiment steel 1 to 10 according to the present disclosure and comparative steel 1 to 3 include compositions shown in Table 1, and may be manufactured through 50kg ingot casting. An ingot was heated at 1,200°C for 3 hours and hot-rolled to a thickness of 4 mm. The hot-rolled steel sheet was subjected to cold-rolling at a final cold rolling thickness of 0.2 mm and then annealed at 960°C. Thereafter, the final cold-rolled annealed sheet was polished up to a sand paper #1200, soaked in a 5 wt% nitric acid aqueous solution at 50°C, and contact resistance and surface analysis were performed with the manufactured test pieces.

[Table 1]

|  | C | N | Si | Mn | P | s | Cr | Sn | Mo | V | Ti | Nb |
|---|---|---|---|---|---|---|---|---|---|---|---|---|
| Embodiment steel 1 | 0.009 | 0.01 | 0.15 | 0.14 | 0.009 | 0.008 | 30 | 0.1 | - | 0.1 | 0.1 | 0.2 |
| Embodiment steel 2 | 0.01 | 0.011 | 0.14 | 0.12 | 0.01 | 0.009 | 27.1 | 0.053 | - | 0.2 | 0.15 | 0.15 |
| Embodiment steel 3 | 0.008 | 0.009 | 0.11 | 0.15 | 0.03 | 0.004 | 28.3 | 0.05 | - | 0.42 | 0.11 | 0.25 |
| Embodiment steel 4 | 0.01 | 0.015 | 0.12 | 0.16 | 0.018 | 0.007 | 33 | 0.06 | 1 | - | 0.05 | 0.12 |
| Embodiment steel 5 | 0.09 | 0.018 | 0.14 | 0.18 | 0.017 | 0.006 | 26 | 0.1 | - | 0.39 | 0.1 | 0.1 |
| Embodiment steel 6 | 0.003 | 0.011 | 0.15 | 0.14 | 0.015 | 0.008 | 27.1 | 0.2 | - | - | 0.18 | 0.2 |
| Embodiment steel 7 | 0.009 | 0.012 | 0.19 | 0.19 | 0.018 | 0.008 | 29.3 | 0.25 | - | - | 0.2 | 0.12 |
| Embodiment steel 8 | 0.009 | 0.01 | 0.17 | 0.18 | 0.019 | 0.009 | 31 | 0.45 | - | - | 0.02 | 0.1 |
| Embodiment steel 9 | 0.01 | 0.009 | 0.16 | 0.17 | 0.01 | 0.006 | 25.7 | 0.05 | - | - | 0.05 | 0.2 |
| Embodiment steel 10 | 0.012 | 0.008 | 0.15 | 0.11 | 0.02 | 0.005 | 31 | 0.1 | - | - | 0.051 | 0.05 |
| Comparative steel 1 | 0.01 | 0.009 | 0.13 | 0.18 | 0.017 | 0.007 | 22 | 0.2 | - | - | 0.1 | 0.05 |
| Comparative steel 2 | 0.013 | 0.008 | 0.16 | 0.14 | 0.015 | 0.003 | 17 | 0.2 | - | - | - | 0.17 |
| Comparative steel 3 | 0.011 | 0.007 | 0.17 | 0.19 | 0.018 | 0.009 | 15 | 0.12 | - | - | 0.05 | 0.1 |

The surface analysis was analyzed by X-ray photoelectron spectroscopy (XPS). The atomic ratio of Cr and Sn in the Cr oxide and Sn oxide peaks analyzed in the 2.9 nm region on a surface were calculated.

The contact resistance was evaluated by preparing two manufactured sheets of 0.2mm in thickness, placing carbon paper (SGL-10BA) between the two sheets, and calculating the average value after valuating interfacial contact resistance four times at a contact pressure of 140N/cm$^2$. The contact resistance was evaluated by the initial contact resistance of the test pieces after soaking them in a 5 wt% nitric acid aqueous solution at 50 °C by polishing up to a sand paper # 1200. The contact resistance was evaluated after applying a 0.7V vs. SCE constant current for 100 hours in a solution of 1M $H_2SO_4$ + 2 ppm HF at 80°C.

The judgment of fitness of contact resistance durability was evaluated by evaluating the initial contact resistance and the contact resistance after applying a 0.7V vs. SCE constant current for 100 hours in a solution of 1M $H_2SO_4$ + 2 ppm HF at 80°C and when all satisfy 20 mΩ·cm$^2$ or less, it was considered as good (O) or otherwise, it was judged as unsuitable (X)

[Table 2]

| | Cr+10Sn (wt%) | 10*Sn/Cr (at%) | Initial contact resistance (mΩ·cm²) | Contact resistance after applying 0.7V vs. SCE constant current for 100 hours in a solution of 1M $H_2SO_4$ + 2 ppm HF at 80°C (mΩ·cm²) | Contact resistance durability |
|---|---|---|---|---|---|
| Embodiment steel 1 | 31 | 0.009 | 10 | 11 | ○ |
| Embodiment steel 2 | 27.63 | 0.0018 | 17 | 19 | ○ |
| Embodiment steel 3 | 28.8 | 0.003 | 16 | 15 | ○ |
| Embodiment steel 4 | 33.6 | 0.012 | 13 | 12 | ○ |
| Embodiment steel 5 | 27 | 0.012 | 11 | 14 | ○ |
| Embodiment steel 6 | 29.1 | 0.014 | 12 | 12.5 | ○ |
| Embodiment steel 7 | 31.8 | 0.012 | 9 | 12 | ○ |
| Embodiment steel 8 | 35.5 | 0.015 | 8 | 9 | ○ |
| Embodiment steel 9 | 26.2 | 0.0021 | 17 | 19 | ○ |
| Embodiment steel 10 | 32 | 0.009 | 12 | 14 | ○ |
| Comparative steel 1 | 24 | 0.0002 | 79 | 167 | X |
| Comparative steel 2 | 19 | 0.011 | 18 | 250 | X |
| Comparative steel 3 | 16.2 | 0.0002 | 89 | 670 | X |

FIG. 2 is for describing the correlation between the content of components in the stainless steel, the atomic ratio in the passive film, and the contact resistance according to an embodiment of the present disclosure.

Referring to Table 2 and FIG. 2, it was found that the stainless steel having a Cr+10Sn value of 25 or more according to formula (1) and a (10*Sn)/Cr value of 0.001 or more according to formula (2) exhibits excellent characteristics with a contact resistance of 20 mΩ·cm² or less and it can be seen that the other region has a low performance of more than 20 mΩ·cm².

Thereafter, the final cold-rolled annealed sheet according to the steel 1 was soaked in an additional acid solution as shown in Table 4, and the properties thereof were evaluated again.

[Table 3]

| | Steel | Acid solution | Temperature and Hours | X/Sn ratio (at%) | Initial contact resistance (mΩ · cm²) | Contact resistance after applying 0.7V vs. SCE constant current for 100 hours in a solution of 1M $H_2SO_4$ + 2 ppm HF at 80°C (mΩ · cm²) | Contact resistance durability |
|---|---|---|---|---|---|---|---|
| Embodiment 1 | Embodiment steel 1 | 10wt%HCl | 50°C/I min. | 0.0012 | 6 | 6.1 | ○ |
| Embodiment 2 | Embodiment steel 2 | 10wt% $HNO_3$+ 3wt% HF | 50°C/I min. | 0.0016 | 6.2 | 6.1 | ○ |

Referring to Table 3, it was found that contact resistance was further improved by soaking the final cold-rolled annealed sheet of the Steel 1 in an acid solution. This means that Cl or F ions can be doped into the Sn oxide present in the surface passive film, as a result, it was confirmed that the value of X/Sn with respect to the atomic ratio of X and Sn in the region within 3 nm in thickness from the surface of the passive film satisfies 0.001 or more, and the contact resistance is improved. In the present disclosure, hydrochloric acid and nitric acid + hydrofluoric acid are used as the soaking solution, but it is possible to use other acid solutions containing Cl or F ions.

That is, the stainless steel according to an embodiment of the present disclosure may secure the contact resistance without having to perform separate surface processing such as coating on the surface of the stainless steel for the PEMFC separator.

While the present disclosure has been particularly described with reference to exemplary embodiments, it should be understood by those skilled in the art that various changes in form and details may be made without departing from the invention as defined in the accompanying claims.

10: PEMFC separator
10A: cathode separator,          10B: anode separator
11: stainless steel              12: passive film
21: membrane electrode assembly  22, 23: gas diffusion layer

**Claims**

1. Stainless steel with improved contact resistance for a Polymer Electrolyte Membrane Fuel Cell (PEMFC) separator, the stainless steel comprising: by weight percent, greater than 0 to 0.02% of C, greater than 0 to 0.02% of N, greater than 0 to 0.25% of Si, greater than 0 to 0.2% of Mn, greater than 0 to 0.04% of P, greater than 0 to 0.02% of S, 25 to 34% of Cr, greater than 0 to 0.5% of Ti, greater than 0 to 0.5% of Nb, 0.05 to 0.6% of Sn, optionally at least one selected from a group consisting of 0 to 0.6% of Cu, 0 to 0.6% of V, and 0.05 to 2.5% of Mo and the remainder comprising iron (Fe) and other unavoidable impurities, wherein the value of the following formula (1) with respect to the atomic ratio of X and Sn in the region within 3 nm in thickness of a surface of a passive film is 0.001 or more, wherein the contact resistance index defined by the following formula (2) relating to the content of Cr and Sn in weight percent of each element is 25 or more and the value of the following formula (3) with respect to the atomic ratio of Sn and Cr in a region within 3 nm in thickness of the surface of the passive film is 0.001 or more

$$X/Sn \text{ ------ formula (1)}$$

Where X is Cl or F analyzed using an X-ray photoelectron spectrometer (XPS)

$$Cr+10Sn \text{ ------ formula (2)}$$

$$(10*Sn)/Cr \text{ ------ formula (3)}$$

analyzed using an X-ray photoelectron spectrometer (XPS).

2. The stainless steel of Claim 1, wherein the value of formula (3) is 0.004 or more.

3. The stainless steel of Claim 1, wherein the contact resistance of the stainless steel is 20 m$\Omega \cdot$ cm$^2$ or less at a contact pressure of 140N/cm$^2$.

4. A method of manufacturing stainless steel with improved contact resistance for a Polymer Electrolyte Membrane Fuel Cell (PEMFC) separator, the method comprising: hot-rolling and cold-rolling stainless steel comprising by weight percent, greater than 0 to 0.02% of C, greater than 0 to 0.02% of N, greater than 0 to 0.25% of Si, greater than 0 to 0.2% of Mn, greater than 0 to 0.04% of P, greater than 0 to 0.02% of S, 25 to 34% of Cr, greater than 0 to 0.5% of Ti, greater than 0 to 0.5% of Nb, 0.05 to 0.6% of Sn, optionally at least one selected from a group consisting of 0 to 0.6% of Cu, 0 to 0.6% of V, and 0.05 to 2.5% of Mo and the remainder comprising iron (Fe) and other unavoidable impurities, to manufacture a cold-rolled thin steel sheet; and soaking the cold-rolled thin steel sheet in an acid solution containing at least one of Cl or F.

5. The method of Claim 4, wherein the acid solution includes hydrochloric acid or hydrofluoric acid.

**Patentansprüche**

1. Edelstahl mit verbessertem Kontaktwiderstand für einen Separator einer Polymerelektrolytmembran-Brennstoffzelle (Polymer Electrolyte Membrane Fuel Cell - PEMFC), wobei der Edelstahl Folgendes umfasst: in Gewichtsprozent, über 0 bis 0,02 % C, über 0 bis 0,02 % N, über 0 bis 0,25 % Si, über 0 bis 0,2 % Mn, über 0 bis 0,04 % P, über 0 bis 0,02 % S, 25 bis 34 % Cr, über 0 bis 0,5 % Ti, über 0 bis 0,5 % Nb, 0,05 bis 0,6 % Sn, optional wenigstens eines, das aus einer Gruppe ausgewählt ist, die aus Folgendem besteht: 0 bis 0,6 % Cu, 0 bis 0,6 % V und 0,05 bis 2,5 % Mo und wobei der Rest Eisen (Fe) und andere unvermeidbare Verunreinigungen umfasst, wobei der Wert der folgenden Formel (1) hinsichtlich des Atomverhältnisses von X und in dem Bereich innerhalb von 3 nm Dicke einer Oberfläche einer Passivschicht 0,001 oder mehr beträgt, wobei der Kontaktwiderstandindex, der durch die folgende Formel (2) definiert ist, in Bezug auf den Gehalt an Cr und Sn in Gewichtsprozent jedes Elements wenigstens 25 beträgt und der Wert der folgenden Formel (3) hinsichtlich des Atomverhältnisses von Sn und Cr in einem Bereich innerhalb von 3 nm Dicke der Oberfläche der Passivschicht wenigstens 0,001 beträgt

$$X/Sn \text{ ------ Formel (1)}$$

Wobei X Cl oder F ist, das unter Verwendung eines Röntgenphotoelektronenspektrometers (X-ray photoelectron spectrometer - XPS) analysiert wird

$$Cr+10Sn \text{ ------ Formel (2)}$$

$$(10*Sn)/Cr \text{ ------ Formel (3),}$$

die durch einen Röntgenphotoelektronenspektrometer (XPS) analysiert wird

2. Edelstahl nach Anspruch 1, wobei der Wert der Formel (3) wenigstens 0,004 beträgt.

3. Edelstahl nach Anspruch 1, wobei der Kontaktwiderstand des Edelstahls höchstens 20 m$\Omega \cdot$ cm$^2$ bei einem Kontaktdruck von 140 N/cm$^2$ beträgt.

4. Verfahren zum Herstellen von Edelstahl mit verbessertem Kontaktwiderstand für einen Separator einer Polymerelektrolytmembran-Brennstoffzelle (PEMFC), wobei das Verfahren Folgendes umfasst: Warmwalzen und Kaltwalzen von Edelstahl, das in Gewichtsprozent über 0 bis 0,02 % C, über 0 bis 0,02 % N, über 0 bis 0,25 % Si, über 0 bis 0,2 % Mn, über 0 bis 0,04 % P, über 0 bis 0,02 % S, 25 bis 34 % Cr, über 0 bis 0,5 % Ti, über 0 bis 0,5 % Nb, 0,05 bis 0,6 % Sn umfasst, optional wenigstens eines, das aus einer Gruppe ausgewählt ist, die aus Folgendem besteht: 0 bis 0,6 % Cu, 0 bis 0,6 % V und 0,05 bis 2,5 % Mo und wobei der Rest Eisen (Fe) und andere unvermeidbare Verunreinigungen umfasst, um ein kaltgewalztes dünnes Stahlblech herzustellen; und Eintauchen des kaltgewalzten dünnen Stahlblechs in eine Säurelösung, die Cl und/oder F enthält.

**5.** Verfahren nach Anspruch 4, wobei die Säurelösung Salzsäure oder Fluorwasserstoffsäure beinhaltet.

## Revendications

**1.** Acier inoxydable à résistance de contact améliorée pour un séparateur de pile à combustible à membrane échangeuse de protons (PEMFC), l'acier inoxydable comprenant : en pourcentage en poids, plus de 0 à 0,02 % de C, plus de 0 à 0,02 % de N, plus de 0 à 0,25 % de Si, plus de 0 à 0,2 % de Mn, plus de 0 à 0,04 % de P, plus de 0 à 0,02 % de S, 25 à 34 % de Cr, plus de 0 à 0,5 % de Ti, plus de 0 à 0,5 % de Nb, 0,05 à 0,6 % de Sn, éventuellement au moins un choisi dans un groupe constitué de 0 à 0,6 % de Cu, 0 à 0,6 % de V, et 0,05 à 2,5 % de Mo et le reste comprenant du fer (Fe) et d'autres impuretés inévitables, la valeur de la formule (1) suivante par rapport au rapport atomique de X et Sn dans la région à moins de 3 nm d'épaisseur d'une surface d'une couche passive étant égale ou supérieure à 0,001, l'indice de résistance de contact défini par la formule (2) suivante concernant la teneur en Cr et Sn en pourcentage en poids de chaque élément étant égal ou supérieur à 25 et la valeur de la formule (3) suivante par rapport au rapport atomique de Sn et Cr dans une région à moins de 3 nm d'épaisseur de la surface de la couche passive étant égale ou supérieur à 0,001

$$X / Sn \text{ ------ formule (1)}$$

Où X est du Cl ou du F analysé à l'aide d'un spectroscope des photoélectrons X (XPS)

$$Cr + 10Sn \text{ ------ formule (2)}$$

$$(10 * Sn) / Cr \text{ ------ formule (3)}$$

analysée à l'aide d'un spectroscope des photoélectons X (XPS).

**2.** Acier inoxydable selon la revendication 1, la valeur de la formule (3) étant égale ou supérieure à 0,004.

**3.** Acier inoxydable selon la revendication 1, la résistance de contact de l'acier inoxydable étant égale ou inférieure à 20 mΩ · cm$^2$ à une pression de contact de 140 N/cm$^2$.

**4.** Procédé de fabrication d'acier inoxydable à résistance de contact améliorée pour un séparateur de pile à combustible à membrane échangeuse de pile à combustible à membrane échangeuse de protons (PEMFC), le procédé comprenant : le laminage à chaud et laminage à froid d'acier inoxydable comprenant en pourcentage en poids, plus de 0 à 0,02 % de C, plus de 0 à 0,02 % de N, plus de 0 à 0,25 % de Si, plus de 0 à 0,2 % de Mn, plus de 0 à 0,04 % de P, plus de 0 à 0,02 % de S, 25 à 34 % de Cr, plus de 0 à 0,5 % de Ti, plus de 0 à 0,5 % de Nb, 0,05 à 0,6 % de Sn, éventuellement au moins un choisi dans un groupe constitué de 0 à 0,6 % de Cu, 0 à 0,6 % de V, et 0,05 à 2,5 % de Mo et le reste comprenant du fer (Fe) et d'autres impuretés inévitables, pour fabriquer une tôle d'acier mince laminée à froid ; et le trempage de la tôle d'acier mince laminée à froid dans une solution acide contenant du Cl et/ou du F.

**5.** Procédé selon la revendication 4, la solution acide comportant de l'acide chlorhydrique ou de l'acide fluorhydrique.

【FIG. 1】

【FIG. 2】

**REFERENCES CITED IN THE DESCRIPTION**

**Patent documents cited in the description**

- KR 1020140081161
- KR 1020130099148
- JP 2004149920 A
- EP 3062376 A1
- EP 1726674 A1